Europäisches Patentamt

European Patent Office

Office européen des brevets

(19)

(11) Veröffentlichungsnummer: **0 257 181**
**A2**

# (12) EUROPÄISCHE PATENTANMELDUNG

(21) Anmeldenummer: **87103660.4**

(22) Anmeldetag: **13.03.87**

(51) Int. Cl.⁴: **G05B 9/02**

(30) Priorität: **22.08.86 DE 3628536**

(43) Veröffentlichungstag der Anmeldung:
**02.03.88 Patentblatt 88/09**

(84) Benannte Vertragsstaaten:
**DE FR GB NL SE**

(71) Anmelder: **VDO Adolf Schindling AG**
**Gräfstrasse 103**
**D-6000 Frankfurt/Main(DE)**

(72) Erfinder: **Pfalzgraf, Manfred**
**Luisenstrasse 24**
**D-6000 Frankfurt am Main 1(DE)**
Erfinder: **Probst, Kurt**
**Altkönigstrasse 19**
**D-6231 Schwalbach a. T.(DE)**
Erfinder: **Wokan, Andreas**
**Jakobstrasse 22**
**D-6100 Darmstadt(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Anordnung zur Betätigung eines Stellgliedes.**

(57) Bei einer Anordnung zur Betätigung eines Stellgliedes mit einer digitalen Steuereinrichtung, insbesondere für ein Kraftfahrzeug, ist die digitale Steuereinrichtung mit einer Überwachungsschaltung verbunden, welche bei Ausfall der digitalen Steuereinrichtung eine Umgehung der digitalen Steuereinrichtung schaltet. Vorzugsweise umfaßt die digitale Steuereinrichtung einen Mikrocomputer, an dessen einem Ausgang bei Ablauf des Programms regelmäßig Signale abgegeben werden, die von der Überwachungsschaltung ausgewertet werden.

EP 0 257 181 A2

## Anordnung zur Betätigung eines Stellgliedes

Die Erfindung betrifft eine Anordnung zur Betätigung eines Stellgliedes mit einer digitalen Steuereinrichtung, insbesondere für ein Kraftfahrzeug.

Bei der Übertragung von Stell-und Regelungsfunktionen auf Leistungsverstellorgane, wie beispielsweise bei elektronischen Gaspedal-Anordnungen für Kraftfahrzeuge, werden im zunehmenden Maße Regler mit Mikroprozessoren angewendet. Bei Störungen im Programmablauf oder bei Ausfällen von Bauteilen im Bereich des Mikroprozessors kann es zu Fehlern bei der Ausgabe der Stell-und Regelungsfunktionen an das Stellglied kommen. Dieses kann einen Totalausfall der gesamten Anlage oder sicherheitsgefährdende Zustände zur Folge haben.

Aufgabe der vorliegenden Erfindung ist es, eine Anordnung zur Betätigung eines Stellgliedes anzugeben, bei welchem auch bei Ausfall oder Fehlfunktion der digitalen Steuereinrichtung eine Betätigung des Stellgliedes möglich ist.

Eine Anordnung zur Betätigung eines Stellgliedes mit einer digitalen Steuereinrichtung, insbesondere für ein Kraftfahrzeug, ist dadurch gekennzeichnet, daß die digitale Steuereinrichtung mit einer Überwachungsschaltung verbunden ist, welche bei Ausfall der digitalen Steuereinrichtung eine Umgehung der digitalen Steuereinruchtung schaltet.

Die erfindungsgemäße Anordnung hat den vorteil, daß eine Betätigung des Stellgliedes auch bei Ausfall der digitalen Steuereinrichtung möglich ist, wobei lediglich die durch die Verwendung der digitalen Steuereinrichtung ermöglichten Zusatzfunktionen entfallen.

Eine Weiterbildung der Erfindung besteht darin, daß die digitale Steuereinrichtung eine Mikrocomputer, einen Analog/Digital-Wandler und einen Digital/Analog-Wandler umfaßt, daß der Eingang des Analog/Digital-Wandlers über einen Schalter mit dem Ausgang des Digital/Analog-Wandlers verbindbar ist und daß ein Ausgang der Überwachungsschaltung mit einem Steuereingang des Schalters verbunden ist.

Durch diese Weiterbildung ist eine Realisierung der erfindungsgemäßen Anordnung mit wenigen zusätzlichen Bauteilen möglich.

Eine andere Weiterbildung der Erfindung besteht darin, daß die Überwachungsschaltung mit einem Ausgang des Mikrocomputers verbunden ist, an welchem bei Ablauf des im Mikrocomputer gespeicherten Programms regelmäßig Signale abgegeben werden, und daß die Überwachungsschaltung derart ausgelegt ist, daß bei Ausbleiben der Signale vom Ausgang der Überwachungsschaltung eine Steuersignal für den Schalter abgegeben wird.

Durch diese Weiterbildung ist es in besonders einfacher Weise möglich, sowohl Störungen des Programmablaufs als auch Störungen bei Ausfällen von Bauteilen im Bereich des Mikroprozessors zu berücksichtigen.

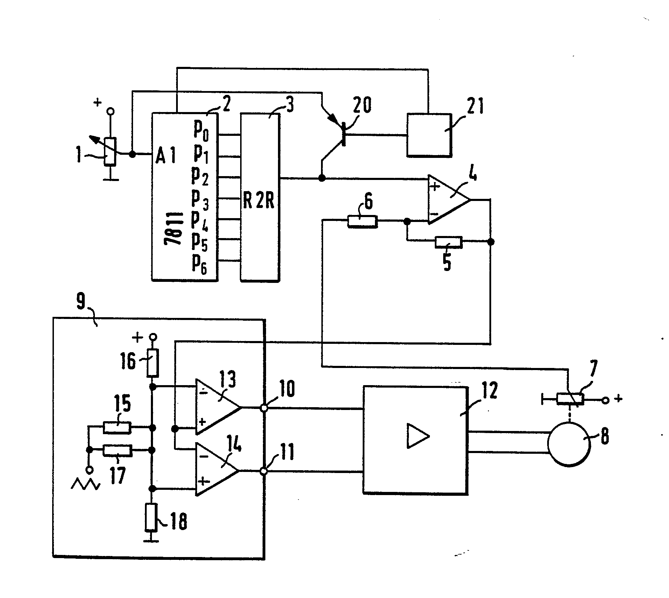

Die Erfindung läßt zahlreiche Ausführungsformen zu. Eine davon ist schematisch in der Zeichnung dargestellt und nach folgend beschrieben.

Das Potentiometer 1 stellt einen Sollwertgeber dar, der beispielsweise mit dem Gaspedal eines Kraftfahrzeugs verbunden ist. Die Ausgangsspannung des Sollwertgebers 1 wird einem Eingang A1 eines Mikrocomputers zugeführt, welcher bei dem dargestellten Ausführungsbeispiel ein Ein-Chip-Mikrocomputer vom Typ 7811 ist und bereits einen Analog/Digital-Wandler umfaßt. Die Ausgänge PO bis P6 des Mikrocomputers 2 sind mit einem Digital/Analog-Wandler 3 verbunden, der im wesentlichen aus einem R-2R-Netzwerk besteht.

Der Ausgang des Digital/Analog-Wandlers 3 ist mit dem nichtinvertierenden Eingang eines Differenzverstärkers 4 verbunden, der über den Widerstand 5 gegengekoppelt ist und welchem über einen weiteren Widerstand 6 von einem Istwertgeber 7 eine der Stellung des Stellgliedes 8 entsprechende Spannung zugeführt ist. Bei dem dargestellten Ausführungsbeispiel dient das Stellglied 8 zur Verstellung einer Drosselklappe des Kraftfahrzeugmotors.

Der Ausgang des Differenzverstärkers 4 ist mit dem Eingang eines Pulsbreitenmodulators 9 verbunden, dessen Ausgänge 10, 11 über eine Endstufe 12 mit dem Stellglied 8 verbunden sind. Der Pulsbreitenmodulator 9 wandelt die Ausgangsspannung des Differenzverstärkers 4 in Impulse um, deren Breite proportional zur Höhe der Ausgangsspannung ist, wobei innerhalb des gesamten Aussteuerbereichs eine Nullstellung vorgesehen ist und je nach Vorzeichen der Abweichung der Ausgangsspannung des Differenzverstärkers 4 am Ausgang 10 oder am Ausgang 11 für verschiedene Laufrichtungen des Stellgliedes 8 Impulse abgegeben werden. Der Pulsbreitenmodulator 9 ist in einfacher Weise aus zwei Differnzverstärkern 13, 14 aufgebaut, denen über Spannungsteiler 15, 16 bzw. 17, 18 dreieckförmige Spannungen zugeführt werden.

Der Mikrocomputer 2 kann bei einer elektronischen Gaspedal-Anlage, von welcher in der Figure der elektrische Teil dargestellt ist, eine Reihe von Aufgaben übernehmen. So kann beispielsweise durch den Mikrocomputer 2 die Fahrzeuggeschwindigkeit geregelt bzw. auf einen höchst zulässigen Wert begrenzt werden. Bei einem Ausfall des Mikrocomputers 2 ist jedoch ohne die erfindungsgemäßen Maßnahmen die Funktion der gesamten Anordnung gestört.

Bei dem dargestellten Ausführungsbeispiel wird der Eingang A1 des Mikrocomputers mit dem Ausgang des Digital/Analog-Wandlers 3 über einen Transistor 20 verbunden, wenn kein ordnungsgemäßer Programmablauf mehr in Mikrocomputer 2 erfolgt. Dazu ist die Basis des Transistors 20 mit einer sogenannten Watchdog-Schaltung 21 verbunden, die wiederum an einen dafür vorgesehenen Ausgang des Mikrocomputers 2 angeschlossen ist. Das im Mikrocomputer abgelegte Programm sieht nun vor, daß mindestens einmal bei jedem Programmdurchlauf die Überwachungsschaltung 21 angesteuert wird. Bleibt diese Ansteuerung nach einer durch den Programmablauf vorgegebenen Zeit aus, so gibt die Überwachungsschaltung 21 eine Spannung ab, welche den Transistor 20 in den leitenden Zustand steuert.

Der Digital/Analog-Wandler 3 weist einen entsprechen hochohmigen Ausgang auf, so daß zum nichtinvertierendem Eingang des Differenzverstärkers 4 nur die über den Transistor 20 geleitete Ausgangsspannung des Sollwertgebers 1 gelangt.

Durch die Überbrückung der digitalen Steuereinrichtung 2, 3 ist eine Betätigung des Stellgliedes 3 mit Hilfe des Sollwertgebers 1 auch bei Ausfall der digitalen Steuereinrichtung gewährleistet. Es sind lediglich nicht mehr die vom Mikrocomputer 2 wahrgenommenen zusätzlichen Funktionen möglich.

## Ansprüche

1. Anordnung zur Betätigung eines Stellgliedes mit einer digitalen Steuereinrichtung, insbesondere für ein Kraftfahrzeug, dadurch gekennzeichnet, daß die digitale Steuereinrichtung (2, 3) mit einer Überwachungsschaltung (21) verbunden ist, welche bei Ausfall der digitalen Steuereinrichtung (2, 3) eine Umgehung der digitalen Steuereinrichtung (2, 3) schaltet.

2. Anordnung nach Anspruch 1, dadurch gekennzeichnet, daß die digitale Steuereinrichtung einen Mikrocomputer (2), einen Analog/Digital-Wandler und einen Digital/Analog-Wandler (3) umfaßt, daß der Eingang des Analog/Digital-Wandlers über einen Schalter (20) mit dem Ausgang des Digital/Analog-Wandlers (3) verbindbar ist und daß ein Ausgang der Überwachungsschaltung (21) mit einem Steuereingang des Schalters (20) verbunden ist.

3. Anordnung nach Anspruch 1, dadurch gekennzeichnet, daß die Überwachungsschaltung (21) mit einem Ausgang des Mikrocomputers (2) verbunden ist, an welchem bei Ablauf des im Mikrocomputer (2) gespeicherten Programms regelmäßig Signale abgegeben werden, und daß die Überwachungsschaltung (21) derart ausgelegt ist, daß bei Ausbleiben der Signale vom Ausgang der Überwachungsschaltung ein Steuersignal für den Schalter abgegeben wird.